# EUROPEAN PATENT APPLICATION

(11) **EP 4 202 774 A1**
(43) Date of publication of application: **28.06.2023**
(21) Application number: 22215547.5
(22) Date of filing: 21.12.2022
(51) Int. Cl.: G06N 3/0495, G06N 3/0442

(54) **RUNTIME PREDICTORS FOR NEURAL NETWORK COMPUTATION REDUCTION**

(30) Priority: 22.12.2021 US 202117559952
(71) Applicant: Tenstorrent Inc., Toronto, Ontario M3C 3E5 (CA)
(72) Inventor: BAJIC, Ljubisa, Toronto (CA); CAPALIJA, Davor, Toronto (CA); CHEN, Yu Ting, Toronto (CA); GREBENISAN, Andrew, Oshawa (CA); FAROOQ, Hassan, Courtice (CA); RAKHMATI, Akhmed, Ajax (CA); CHIN, Stephen, Toronto (CA); BLAGOJEVIC, Vladimir, Banjaluka (BA); BHULLAR, Almeet, Brampton (CA); VASILJEVIC, Jasmina, Toronto (CA)
(74) Representative: Haseltine Lake Kempner LLP

(57) **Abstract**

Methods and systems relating to reducing the number of computations required to execute an artificial neural network (ANN) are disclosed herein. The methods include a computer-implemented method conducted during an execution of an ANN. The method includes generating a set of execution data, generating a summary of a set of neural network data of the ANN, generating a summary of a set of execution data of the execution of the ANN, generating a prediction using the summary of the set of neural network data and the summary of the set of execution data, and executing a composite computation. The composite computation is required for the execution of the ANN. The method also includes suppressing a set of component computations of the composite computation. The set of suppressed component computations is at least partly determined by the prediction.

## Description

### BACKGROUND

Machine intelligence systems represent one of the most computationally complex and energy intensive computation applications of the modern age. As artificial neural networks (ANNs) represent the bulk of current machine intelligence systems in use today, a significant amount of research and development has been invested in ways to make the execution of ANNs less energy intensive. ANNs take in an input tensor, conduct calculations using the input tensor and a set of network tensors, and produce an output tensor. The output tensor represents an inference generated by the network in response to the input. For example, if the ANN were an image classifier, the input could be an encoding of an image of a cat, and the output vector could be an inference indicating that the subject of the image was a cat. The reason these systems are so resource hungry is that the data structures they are operating on are generally very large, and the number of discrete primitive computations that must be executed on each of the data structures is likewise immense.

Machine intelligence systems represent a challenging environment both in terms of the number of computations that are required and the large data structures that must be moved between memory and the computation area of the system for those computations to be executed. The network data for a standard ANN can often comprise billions of discrete data entries. The network data can comprise weight vectors, filter vectors, and various other kinds of data based on the type of ANN involved. The network data defines the ANN and determines what output will be provide for a given input. The network data is usually organized into layers with the output of each layer serving as the input to the next layer. In a traditional ANN, the layers are fully connected, which requires every element of the input vector to be involved in a calculation with every element of the weight vector. The resulting number of calculations involved is very large. Furthermore, the input data to the ANN, the network data for the ANN, and the execution data that is generated through the execution of one layer of the ANN to serve as inputs for the next layer of the ANN all need to be held in memory until they are used for computations in the next layer.

A developing area of research in the field of machine intelligence involves ways in which the number of computations required for generating an inference from an ANN can be reduced while still maintaining fidelity to a full execution of the ANN. Approaches in this field include those in which specific computations in the execution of an ANN are skipped at the time of execution of the ANN based on various factors. For example, specific approaches involve "helper layers" which can reduce the number of computations during the execution of the ANN based on the input data to the ANN. Additional approaches involve modifying the ANN prior to execution by pruning out network data that is not necessary for the execution of the network to thereby produce a different, modified, ANN that can be executed with fewer computations. These approaches are often referred to with terms such as "drop out" and "pruning" and are done during the initial training phase of the ANN as the appropriate network data for a given network is being learned.

### SUMMARY

Methods and systems related to the field of artificial neural networks (ANN) are disclosed herein. The methods and systems disclosed include approaches for reducing the number of computations required to execute a given ANN. The execution of an ANN can require the execution of at least one composite computation. The methods and systems disclosed include neural network accelerators, or other computational devices for executing an ANN, which are loaded with a trained ANN and reduce the computational complexity of an execution of that trained ANN while maintaining fidelity to the full execution of the ANN. The computational complexity of an execution of an ANN can be reduced by suppressing component computations of one or more composite computations that must be executed as part of the execution of the ANN.

In specific embodiments of the invention, methods are provided for reducing computations in the execution of an ANN where all steps of the methods are conducted at runtime - during execution of the ANN. These methods involve generating a predictor using the neural network data of the ANN and the execution data of the present execution of the ANN. The predictor is indicative of the salience of specific portions of the execution data or neural network data and can be used to suppress computations involving less salient neural network data or execution data. The resulting reduction of computations is thereby determined based on specific inputs to the ANN and the characteristics of the ANN to produce a reduction in computations that is narrowly tailored to a given execution of the ANN.

In specific embodiments of the invention, the predictor is generated algorithmically at runtime. Accordingly, there is no need to store additional "helper layers" or other data structures to assist in reducing computations. Furthermore, in specific embodiments where the predictor is generated at runtime using only the network data of the ANN and the execution data of the present execution of the ANN, there is no need to train additional network data to reduce computations. In these embodiments, as the reduction in computation has been fully decoupled from the training procedure, the complexity and time of training the network decreases relative to related approaches.

In specific embodiments of the invention, an ANN will be executed by a network of computational nodes in which the movement of network and execution data between the computational nodes is a design constraint set by the bandwidth and latency of the network. The network of computational nodes could be a set of networked processing cores. In these embodiments, the fact that the predictor and associated apparatus for suppressing computations is derived from network and execution data that will already be present on a given computational node leads to significant benefits in that additional data does not need to be moved through the network of computational nodes to provide for guidance on which computations should be suppressed. This contrasts with approaches that use "helper layers" or other data structures to help determine which computations can be suppressed as those helper layers and data structures would need to be routed through the network in addition to the network data of the ANN itself.

In specific embodiments of the invention, a computer-implemented method, conducted during the execution of an ANN, is provided. The method comprises generating a set of execution data, generating a summary of a set of neural network data of the neural network, generating a summary of the set of execution data of the execution of the neural network, generating a prediction using the summary of the set of neural network data and the summary of the set of execution data, executing a composite computation, and suppressing a set of component computations of the composite computation. The composite computation is required for the execution of the neural network. The set of suppressed component computations is at least partly determined by the prediction.

In specific embodiments of the invention, a system is provided. The system comprises a set of processing cores, a network communicatively connecting the processing cores, a neural network stored on a set of memories across the set of processing cores, a set of processing pipelines on the set of processing cores, and a set of instructions stored on the set of memories across the set of processing cores. The set of instructions, when executed by the set of processing pipelines, cause the system to execute the artificial network and conduct a method during the execution of the artificial neural network, the method comprising generating a set of execution data, generating a summary of a set of neural network data of the neural network, generating a summary of the set of execution data of the execution of the neural network, generating a prediction using the summary of the set of neural network data and the summary of the set of execution data, executing a composite computation, and suppressing a set of component computations of the composite computation. The composite computation is required for the execution of the neural network. The set of component computations is at least partly determined by the prediction.

In specific embodiments of the invention, a computer-implemented method, conducted during an execution of a directed graph, is provided. The method comprises generating a set of execution data, generating a summary of a set of directed graph data of the directed graph, generating a summary of the set of execution data of the execution of the directed graph, generating a prediction using the summary of the set of directed graph data and the summary of the set of execution data, executing a composite computation, and selectively executing a set of component computations of the composite computation. The set of component computations is selected based on the prediction. The composite computation is required for the execution of the directed graph.

### BRIEF DESCRIPTION OF THE DRAWINGS

Figure 1 illustrates a flow diagram of a set of methods in accordance with specific embodiments of the invention disclosed herein.
Figure 2 illustrates a block diagram of a system in accordance with specific embodiments of the invention disclosed herein.
Figure 3 illustrates a flow diagram of a set of methods conducted by a compiler in accordance with specific embodiments of the invention disclosed herein.
Figure 4 illustrates a conceptual data flow diagram for the reduction of computations in the execution of an ANN using a predictor to determine which computations to suppress in a composite computation in accordance with specific embodiments of the invention disclosed herein.
Figure 5 illustrates a conceptual data flow diagram for the reduction of computations in the execution of an ANN using a predictor to determine a set of salient network data in the operand data of a composite computation in accordance with specific embodiments of the invention disclosed herein.
Figure 6 illustrates a conceptual data flow diagram for the reduction of computations in the execution of an ANN using a predictor to more accurately determine a set of salient network data in the operand data of a composite computation in accordance with specific embodiments of the invention disclosed herein.

### DETAILED DESCRIPTION

Methods and systems related to the field of artificial neural networks (ANN) in accordance with the summary above are disclosed in detail herein. The methods and systems disclosed in this section are nonlimiting embodiments of the invention, are provided for explanatory purposes only, and should not be used to constrict the full scope of the invention. It is to be understood that the disclosed embodiments may or may not overlap with each other. Thus, part of one embodiment, or specific embodiments thereof, may or may not fall within the ambit of another, or specific embodiments thereof, and vice versa. Different embodiments from different aspects may be combined or practiced separately. Many different combinations and sub-combinations of the representative embodiments shown within the broad framework of this invention, that may be apparent to those skilled in the art but not explicitly shown or described, should not be construed as precluded.

Specific embodiments of the invention disclosed herein are described with reference to a complex computation in the form of mathematical operations that must be conducted, using a set of computation data, in order to execute an artificial neural network (ANN). The ANN could be as a convolutional neural network (CNN), a residual neural network (ResNet), recursive neural network (RNN), attention network, embedding, or any form of trained directed graph. As such, the complex computation can be required to generate an inference from the ANN in response to a given input. The execution of the ANN can be conducted while training the ANN during a training phase. In the alternative or in combination, the execution of the ANN can be conducted after training the ANN while the network is deployed in a machine intelligence application. For example, the ANN could be deployed on an edge device such as a smartphone to conduct speech recognition on incoming audio files or on a server to run a recommendation engine for the feed of a social network application. The complex computation can include at least one composite computation which in term comprises at least one component computation. For example, the composite computation could be a matrix multiplication computation and the component computations could include the multiplications operations conducted using the individual elements of the matrix.

The computation data for the execution of an ANN can include the input data to the ANN, the execution data (e.g., activation data that is passed from one layer of the network to the next), the network data (e.g., weight or filter data) that defines the network, and the output data which is ultimately produced from the execution of the ANN. If the execution of the ANN is conducted while training the ANN, the input data can be a training input which can be associated with a label (i.e., an expected response of an appropriately trained network) to be used in a supervised learning routine. The computation data can be managed in blocks of commonly routed and addressed individual data elements.

In specific embodiments of the invention, a complex computation is executed using a set of instructions which are executable by a processor. The instructions can include an operational code that identifies the operation the processor must execute and a set of operand data on which the operation should be conducted. As used in this disclosure the term "operand data," when used to refer to the operands in the instructions used to execute an ANN, includes all of the computation data for the execution of the ANN listed above so long as it is being used as an operand in the execution of an instruction.

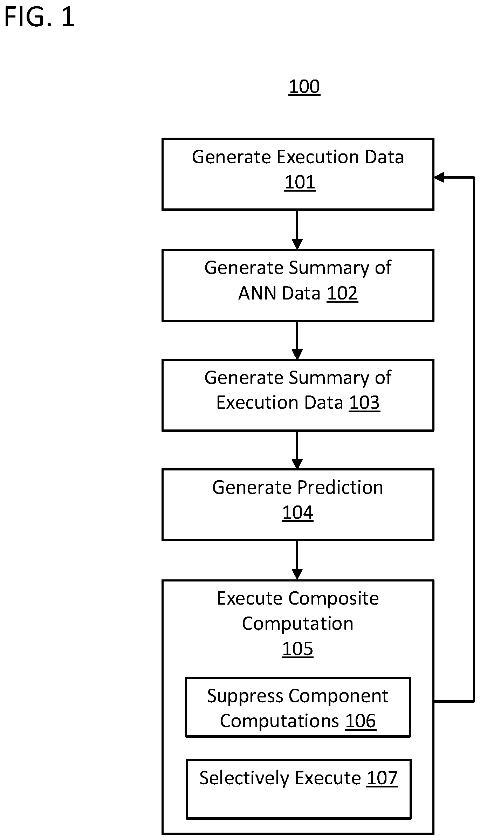

Figure 1 illustrates a flow diagram 100 of a set of methods in accordance with specific embodiments of the invention disclosed herein. In specific embodiments of the invention, all the steps shown in flow chart 100 are conducted during the execution of an ANN and can be used to reduce the number of computations required to execute the ANN. The execution of the ANN can be conducted after the ANN has been trained and can result in the generation of an inference by the trained ANN. The execution of the ANN can also be conducted while the ANN is being trained and result in the generation of an inference that can be compared against an expected output to help modify and train the network. The flow chart includes the execution of a composite computation and also includes a loop because the execution of a complex computation may require the execution of a large number of subsidiary composite computations. For example, the composite computation executed in step 105 could be the mathematical operations required for the execution of a portion of a layer of an ANN and additional loops of the method could be used for additional portions of the same layer. As another example, the composite computation executed in step 105 could be the mathematical operations required for the execution of a layer of an ANN and additional loops of the method could be used for additional layers of the ANN.

Flow chart 100 beings with a step 101 of generating a set of execution data. The execution data is data generated during the execution of the ANN. For example, the execution data could be accumulation values generated via an operation that uses a set of network data and a set of input data to the ANN as the operands of the operation. Many ANNs include multiple layers, such that the execution data can also be generated via an operation conducted using a set of network data and a set of execution data from the execution of a prior layer of the ANN. For example, in a fully connected layer of an ANN, the network data could be the weights that represent the layer, and the input to the fully connected layer could be an input to the ANN or an output of a prior layer in the ANN. In keeping with this example, the execution data could be the product of a matrix multiply operation using the input to the fully connected layer and the weights of the layer. As another example, the execution data could be the product of a convolution operation using the input to the network and a filter of the network.

The execution data in step 101 can be generated by a stand-alone processor or a computational node in a network of computational nodes such as a processing core in a multicore processor. The execution data can be generated by an operation conducted when executing an instruction. The operation could be conducted by an execution area of a processor, or any computational node, such as in the processing pipeline of a processor. The processing pipeline could include arithmetic logic units (for either integers or floating-point operands) as well as circuitry to obtain the operand data from memory and write back the output of the operation to memory.

Flow chart 100 is drawn such that the execution data will be used in another operation. In the example of an ANN, unless the execution data is the output of the ANN, generated execution data is used for the further execution of the ANN. For example, the execution data could be the output of a fully connected layer and serve as the input to a subsequent fully connected layer. The execution data could be generated by a matrix multiplication operation and then be involved in another matrix multiplication operation with the network data of the next layer. As such, after following the loop of flow chart 100, specific steps do not need to be executed in the next iteration of the loop as described below. For example, the composite computation executed in step 105 may generate additional execution data which will immediately be used in the next composite computation executed by the loop such that step 101 does not necessarily need to be executed on that iteration.

Flow chart 100 continues with a step 102 of generating a summary of a set of neural network data of the ANN and a step 103 of generating a summary of a set of execution data of the execution of the neural network. The execution data that is summarized can be the execution data generated in step 101 or execution data generated in step 105. The neural network data that is summarized can be the network data that is needed for the next composite computation required to execute an ANN in step 105. The summaries can be generated during the execution of the neural network and can be conducted in real time prior to the actual execution of the composite computations associated with the set of neural network data and the set of execution data. For example, in the case of an ANN with multiple layers, the summaries could be generated as soon as the execution data is generated from the execution of a prior layer of the neural network and before the computations of the next layer are conducted.

The summaries of the network data and the execution data can be generated in various ways. For example, the summaries can be generated using a sampling operation. The sampling operation can be conducted across a data structure or repeatedly across subsets of the data structure. The subsets can be specific dimensions of the data structure, span different dimensions of the data structure, or divide up specific dimensions of the data structure. The sampling can be random or targeted. The sampling could select for the largest value or values across the data structure or subsets thereof. The sampling could also take the average, mean, or medium of values in the data structure, or values in subsets of the data structure. For example, the sampling could be an average pooling operation on various subsets of the data structure with the average pooled values representing the summary of the original data structure. As another example, the sampling could be a Top-K operation which selects the "K" values with the largest magnitude in a data structure to represent the rest of the values from the data structure. As another example, the sampling could be a random sampling which selects a fixed number of values from different portions of the data structure to represent the remaining values from the same portion. The summaries can also involve the application of a transform to the data to reduce the dimensionality of the data structure. For example, the transform could produce a lower rank approximation of a matrix or provide a linear approximation of a data structure by producing a linear representation of the data values and using the coefficients of the linear representation in place of the data structure.

The summaries of the network data and execution data can be generated using different operations or the same operation. For example, the summary of the set of neural network data generated in step 102 can be conducted using a first sampling operation, and the summary of the set of execution data generated in step 103 can be conducted using a second sampling operation, where the sampling operation is the same in both steps or where two different sampling operations are done in the two different steps. In an example in which the first and second sampling operations are the same, the first and second sampling operations could be average pooling operations in which subsets of the network data and the execution data are averaged and the data is reduced by only retaining the average of each subset.

In specific embodiments of the invention the summaries will be generated such that the summaries of the network data and execution data are still compatible for the operation that the original network and execution data are used in during a standard execution of the composite computation. For example, if the composite computation were a matrix multiply operation, the summaries could be generated from the original matrices such that the inner dimensions of the resulting summaries were the same number. In this manner, the summaries can be compatible for the same operation the original data was used in because the inner dimensions still match. As another example, if the composite computation were a convolution operation, the summaries could be generated from the original tensors such that they ended up with the same dimensionality (e.g., two four dimensional tensors being reduced into two three dimensional tensors).

Flow chart 100 continues with a step 104 of generating a prediction using the summary of the set of neural network data and the summary of the set of execution data. The prediction can be a prediction of the value or values that would be produced by the composite computation in a standard execution (i.e., if every component computation of the composite computation was fully executed). In specific embodiments of the invention, the prediction is generated in steps 104 using a predictor computation with the summary of the set of neural network data generated in step 102 and the summary of the set of execution data generated in step 103 as operands, and the composite computation and the predictor computation are the same type of computation. For example, if the composite computation were a matrix multiply operation with the original data as operands, the predictor computation could also be a matrix multiply operation with the summary data as operands.

In specific embodiments of the invention, generating the prediction is less computationally intensive than executing the composite computation. The prediction can be a rough estimate gleaned through a different operation that the composite computation itself. However, the prediction also can be generated using the same type of operation as the composite computation itself. For example, if the composite computation is a matrix multiplication, the prediction can be a matrix multiplication with significantly smaller data structures. Depending upon how aggressively the operation to generate the summaries condenses the data structures, the operation can be vastly simple. For example, if the network data and execution data were each 512x512 matrices and the summary was an average pool 4 operation which generated two 128x128 summaries, the resulting prediction could be calculated using 1.5% the number of computations required for the original computation.

In specific embodiments of the invention, the summaries generated in steps 102 and 103 can be retained after the prediction is generated in step 104. Specific ANNs, and some other complex computations, exhibit a high degree of redundant data usage. As such, portions of execution data may be involved with multiple portions of network data and vice versa in different composite computations of an execution of an ANN. As such, the step of generating the summaries may be skipped in later composite computation involved in the execution of the same ANN if the summary for certain computation data was generated previously and is already stored in association with its data.

In specific embodiments of the invention, after a complex computation has been completed, the summaries used to generate the predictions through various iterations of the methods represented by flow chart 100 can be discarded and do not need to be stored in memory. The is because the execution data is specific to a given execution of the network, such that a summary of the execution data from a first execution of the network may not be useful for later executions of the network. However, in specific embodiments, the summaries of the network data can be retained after a complex computation, such as the execution of an ANN, has been completed. If the network is not in a training phase, in which the network data is adjusted after each execution, the network data may remain static from one execution to the next such that the summary can be recycled during the next execution of the ANN. The summary could therefore be kept in the same data structure as the underlying network data or be otherwise stored relationally with the network data. In specific embodiments, in which the ANN is executed using a network of computational nodes, the summary of the network data could be stored in the same computational node as the underlying network data such that it is available to calculate another prediction which will be used in association with that underlying network data.

Flow chart 100 continues with a step 105 of executing a composite computation. The composite computation can be a computation requiring the execution of multiple component computations. Depending upon the architecture of the processor, the composite computation could be specified as a single instruction or the individual component computations could be specified as individual instructions. Regardless, multiple discrete computations, in the form of component computations, are executed by a processor to execute the component computation. For example, the composite computation could be a matrix multiply operation and the component computations could be the multiply operations of the various elements of the two matrices in the matrix multiply operation.

Step 105 is illustrated as including the optional steps 106 of suppressing a set of component computations of the composite computation and step 107 of selectively executing a set of component computations of the composite computation. The sets of component computations can be selected based on the prediction generated in step 104. The prediction can be used in various ways to provide information regarding the saliency of the various component computation that make up the composite computation. As such, a prediction can be used to assure that the most salient component computations are executed while the less salient component computations are not. Accordingly, the complexity of the composite computation can be reduced by reducing the number of computations which must be executed while at the same time maintaining fidelity to the fully executed composite computation. Suppressing the component computations can include not conducting the computations at all, providing a substitute value in place of the output of the computation, or executing the computation with reduced resolution.

The selection of which component computations are suppressed and which are executed based on the prediction can be conducted in various ways. Generally, if portions of the original operand data were summarized and those summaries were associated with a prediction value with a low magnitude, while other portions of the original operand data were in the same way associated with a prediction value with a high magnitude, component computations utilizing that first type of original operand data are suppressed. However, within that general approach there are numerous methods for selecting component computations to be suppressed. For example, the comparison of which original operand data contributed to a prediction with the highest magnitude could be conducted one time across the entire set of operand data or several times amongst subsets of the set of operand data. As another example, even once a particular set of operand data was found to be associated with a lower magnitude prediction value, selecting from among that operand data to determine which computation should be suppressed can be conducted in various ways. For example, if the sampling of the operand data was an average pooling operation, the computations to be suppressed could be selected based on a random selection of the operand data. However, if the sampling of the operand data had randomly selected specific values, component computations associated with those specific values could be suppressed.

A specific application of the methods of Fig. 1 involves the execution of multiple layers of an ANN where the output of each layer is required as an input for the next layer. In this application, the composite computation executed in step 105 above could be a composite computation required for the execution of one layer of the ANN. For example, the composite computation could be a matrix multiply operation and the set of component computations of that composite computation could be multiplication operations of the data elements in the matrixes. In this example, the approach illustrated in Fig. 1 could be used to reduce the complexity of a large matrix multiply operation required for the execution of a fully connected layer in an ANN with network data elements on the order of millions or billions resulting in a major decrease in computation time. However, the process could also be repeated multiple times during the execution of an ANN to realize even greater savings in computational resources.

In specific embodiments of the invention, the methods described with reference to flow chart 100 can be executed repeatedly as a complex computation, such as the execution of an ANN, is executed. For example, the composite computation executed in step 105 could be the execution of a layer, or portion thereof, in an ANN and the output data of that computation could take the place of the execution data generated in step 101 in a following iteration of the method. Alternatively, the composite computation executed in step 105 could be a partial execution of a layer in an ANN and the output data of that computation could be stored temporarily while the same input data from step 101 was utilized with another portion of network data. In such an approach, step 103 could be skipped as the summary of the execution data may have been already made available from a prior iteration and could have been stored temporarily in memory. Alternatively, the composite computation executed in step 105 could be a partial execution of a layer in an ANN using a portion of the overall input to the layer, and the output data of the computation could be stored temporarily while another portion of the overall input to the layer was used in place of execution data 101. In such an approach the same network data may be used with the new execution data such that step 102 could be skipped. However, in such an approach new network data may also be required such that step 102 would need to be executed for the new network data.

In specific embodiments of the invention flow chart 100 can be navigated iteratively to include methods comprising iteratively generating, after executing the composite computation in step 105, additional summaries of additional sets of neural network data of the ANN in additional iterations of step 102. The methods can also comprise generating, after executing the composite computation in step 105, additional summaries of additional sets of execution data of the neural network in additional iterations of step 103. As described previously, additional iterations may skip either of these steps if the same network data is being used with new execution data or if the same execution data is being used with new network data. In other words, the methods can include generating, after executing the component computation, at least one of: (i) additional summaries of additional sets of neural network data of the neural network; and (ii) additional summaries of additional sets of execution data of the neural network. Regardless, the additional iterations will include generating, after generating the additional summaries in one or both of steps 102 and 103, additional predictions using the additional summaries. These additional predictions can be used to suppress additional sets of component computations in additional composite computations where the additional sets of component computations are at least partly determined by the additional predictions.

Iterative application of methods represented by flow chart 100 can exhibit significant compounding benefits. In situations where the suppression of a component computation produces a zero value, the suppressed output values create sparser and less complex execution data. This execution data will then be more conducive to a simplified summary and a prediction which indicates that even more computations can be suppressed on an additional loop of the method in the next composite computation. The less salient values that are passed forward lead to more values that are less salient. As a result, in specific embodiments there is a high order speed up in the overall complex computation from the iterative utilization of this approach (e.g., quadratic not linear).

Specific embodiments of the invention disclosed herein are described with reference to a set of processing cores in a multicore processor executing an ANN or other complex computation. The processing cores of a multicore processor can cooperatively execute complex computations by executing composite computations of that complex computations in distributed fashion across the processing cores. To do so, the processing cores need to share data required for the execution of those composite computations as well as receive instructions regarding which composite computations they have been assigned. The processing cores can share this information using an interconnect fabric such as a network-on-Chip (NoC). The same network can be used to load the individual processing cores with their instructions and to provide them with the initial data to execute the computation. A multicore processor, including the various processing cores and the interconnect fabric which connects them, provide a basis for explaining various embodiments of the invention disclosed herein. However, while the example of a set of cores of a multicore processor is used as an example throughout this disclosure, specific embodiments of the invention disclosed herein are more broadly applicable to any set of computational nodes connected using any form of interconnect fabric or network.

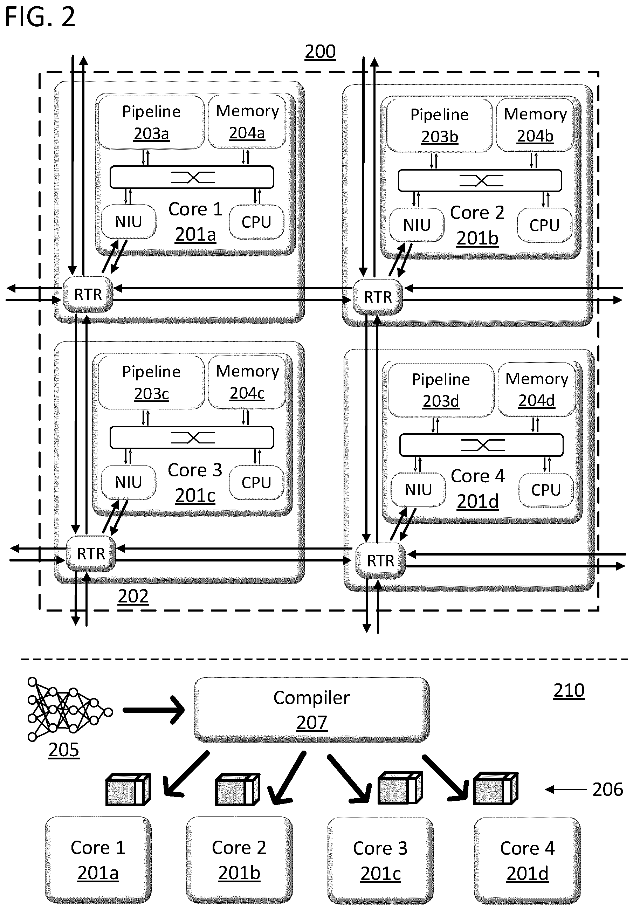

Fig. 2 illustrates a block diagram 200 of a system in accordance with specific embodiments of the invention disclosed herein. The system includes a set of processing cores 201a, 201b, 201c, and 201d, and a network 202 communicatively connecting the processing cores. The illustrated network 202 is an interconnect fabric in the form of a network-on-chip ("NoC") and associated circuity such as routers and network interface units on each of the processing cores. The system also includes a set of processing pipelines 203a, 203b, 203c, and 203d, on the set of processing cores, and a set of instructions stored on a set of memories 204a, 204b, 204c, and 204d across the set of processing cores. The set of instructions stored on the set of memories across the set of processing cores, are instructions which, when executed by the set of processing pipelines 203a, 203b, 203c, 203d, cause the system to execute an ANN and conduct a method in accordance with the methods described with reference to Fig. 1.

Systems in accordance with this disclosure can include various components in the alternative or in combination. For example, the processing pipelines can be replaced by any execution area in a computation system. The system also includes local controllers on each of the cores in the form of a set of CPUs. The system also comprises a neural network 205 which is stored on the set of memories 204a, 204b, 204c, and 204d across the set of processing cores. In specific embodiments, such as the embodiments in accordance with Fig. 2, the set of memories that store neural network 205 are the same memories which store the instructions mentioned previously. However, in alternative embodiments, there could be different memories for the instructions and the network data for neural network 205 on each of the processing cores.

In specific embodiments of the invention, the network of processing cores used to execute a complex computation will include a connection to an external memory. The memory can be a random-access memory. The memory can be used to load the network data into the network of processing cores. The memory can be on the same substrate as one or more of the processing cores or be physically separate.

In specific embodiments of the invention, a neural network is broken into blocks and distributed across a set of processing cores to parallelize the execution of the neural network. The execution data of a particular execution of the neural network could be shared amongst the cores, as the network is executed, using a network that connects all the cores. The division of the network data into blocks and the assignment of the blocks to specific processing cores can be done through the manual programming of instructions for the network to move data through the network. Alternatively, the breaking up of the neural network into blocks and the assignment of the blocks to the cores can be conducted by a compiler.

In specific embodiments of the invention, the blocks sizes are kept within a range of sizes based on the capacity of the individual processing cores, the bandwidth and latency of the network, and the requirements of the complex computation and its composite computations. The blocks of neural network data and execution data can be the operands of the instructions that specify the composite computation or the composite computation itself. In specific embodiments of the invention, the blocks of neural network data hold a set of ANN data elements of the ANN. For example, the blocks could be 128x128 matrices where each entry of the matrix was a weight value of the neural network specified in a format such as a 16-bit floating point or 8-bit integer. The set of ANN data elements can range in the hundreds or thousands per block. In specific embodiments of the invention, the blocks of neural network data are smaller than a layer of the ANN but larger than a single data element of the ANN. Accordingly, a layer of the ANN can be broken into pieces and executed in parallel by multiple computational nodes or by a single computational node in smaller pieces. As a result, multiple summaries may need to be generated for the multiple pieces of network data as opposed to a single summary for the neural network data of an entire layer. The summaries can be generated by a compiler ahead of time or during execution of the neural network. If the summaries are generated during the execution of the neural network, they can be generated across the network using the data that was specifically assigned to each processing core.

In conceptual data flow diagram 210 of Fig. 2, the neural network 205 is broken into blocks 206 by a compiler 207 and assigned to various processing cores as a precursor to executing the neural network 205 on the set of processing cores. In the illustrated example, a compiler 207 breaks up the neural network data into blocks and assign it to specific cores. As illustrated, the network data is distributed in blocks 206 that are delivered and stored on various processing cores. Compiler 207 can generate tags and/or instructions such that the network data in blocks 206 are routed to the appropriate processing cores by network 202. The instructions can be executed by the routers and/or network interface units of network 202.

In specific embodiments of the invention, a compiler can be instantiated in various ways. For example, the compiler could operate on a separate controller that is in networked communication with the network 202 and load the network and instructions into the core. In another example, the compiler could be instantiated on the local controllers of the processing cores such as the CPUs in Fig. 2. In another example, the compiler could be instantiated by the processing pipelines of the processing cores.

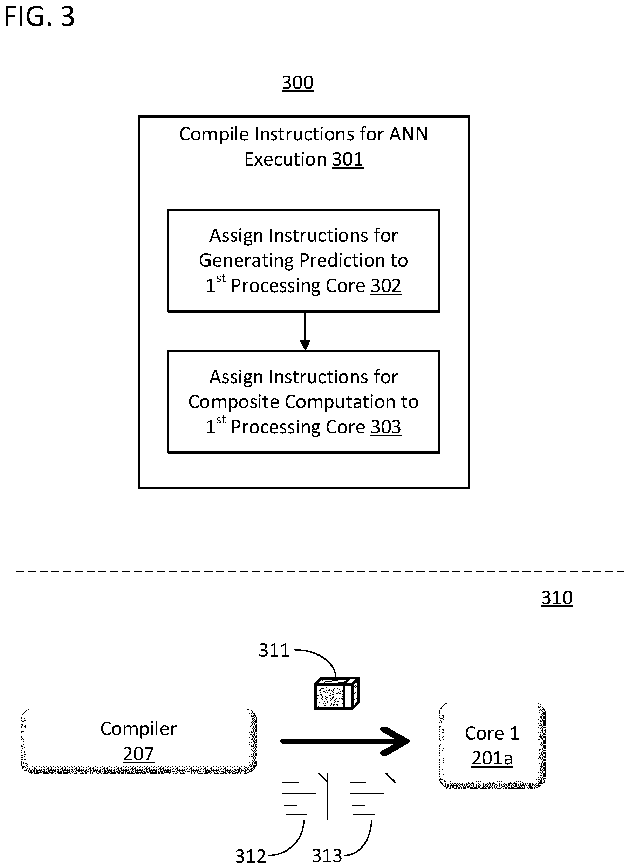

Figure 3 illustrates a flow diagram 300 of a set of methods conducted by a compiler in accordance with specific embodiments of the invention disclosed herein. In specific embodiments, the methods of flow diagram 300 are precursors to the execution of a neural network and would be executed prior to the execution of the neural network such as in the methods of flow diagram 200. In specific embodiments of the invention, a compiler will be programmed to conduct the methods of flow chart 300 prior to the execution of a neural network. The flow chart includes a step 301 of compiling a set of instructions for the execution of the neural network using a set of at least two processing cores. Step 301 can be conducted by a compiler such as compiler 207 and include the generation of instructions which use the network data and execution data of an execution as operand. The compilation step can also involve placement decisions regarding where specific operations will be executed and where specific operand data will be stored or transferred before it is used and after it is generated. The compilation can involve placing instructions for the execution of an ANN in accordance with the approaches of Fig. 1 on various processing cores.

In specific embodiments of the invention, the placement of instructions for the execution of an ANN in accordance with specific approaches disclosed herein can include the placement of instructions for generating the predictions mentioned above and instructions for generating the composite computations mentioned above. For example, the instructions required for the execution of steps 102-104 in Fig. 1 can be part of the instructions used to generate a prediction, and the instructions required for the execution of steps 101 and 105 can be part of the instructions used to execute an ANN. In specific embodiments of the invention, the instructions to generate a prediction for a composite computation and the instructions to conduct the composite computation will be assigned to the same processing core along with the data required to execute that composite computation. This provides significant benefits because the same data structure is used to generate the prediction and the composite computation so they are already available on a single processing core and executing both sets of instructions in the same place prevents the need to route data regarding the prediction through the network.

Flow chart 300 includes steps within step 301 because the compilers can conduct optimization operations iteratively and because different compilers conduct the order in which they fix certain operations in place in different order. The steps within step 301 are therefore drawn as such to represent the fact that they are part of the compilation process for the instructions for the execution of the ANN but they can be done in either order, simultaneously, or iteratively. Flow chart 300 includes a step 302 of assigning instructions from a set of instructions for generating a prediction to a first processing core in a set of at least two processing cores. For example, a compiler 207 could assign instructions 312 for generating a prediction for a composite computation, which uses a block of network data 311 as operand data, to processing core 201a. Flow chart 300 also includes a step 303 of assigning instructions from a set of instructions for executing a composite computation to the first processing core. For example, compiler 207 could assign instructions 313 for executing the same composite computation, which uses block of network data 311 as operand data, to processing core 201a. Accordingly, the compiler 207 will also assign block of network data 311 to core 201a, and the prediction will be available where it is needed because both sets of instructions 312 and 313 use the same block of network data 311 and the result of the prediction instructions is used to condition the composite computation on the same core 201a.

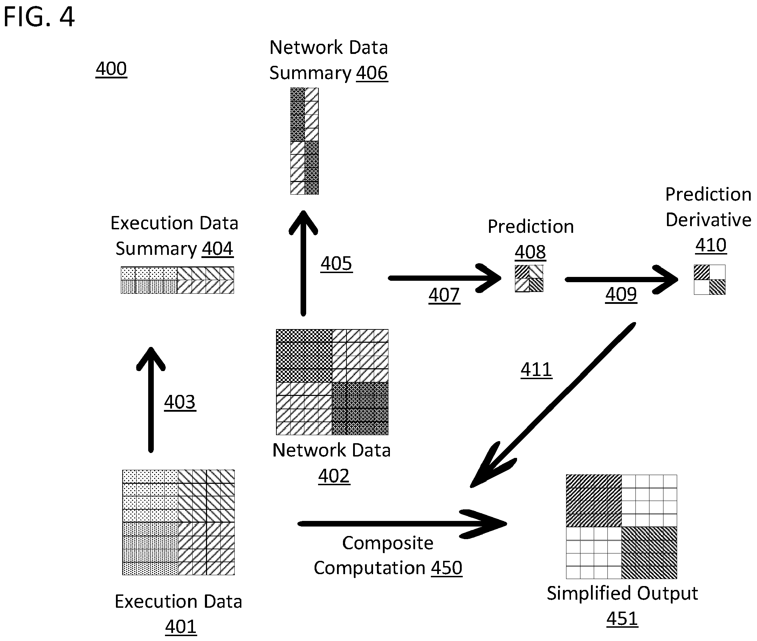

Figure 4 illustrates a conceptual data flow diagram 400 for the reduction of computations in the execution of an ANN using a predictor to determine which computations to suppress in a composite computation 450 in accordance with specific embodiments of the invention disclosed herein. The conceptual data flow diagram 400 illustrates the data structures involved in the execution of a method that is in accordance with flow chart 100. Flow diagram 400 includes a block of execution data 401 and a block of network data 402. The block of execution data 401 and block of network data 402 are the operands for a composite computation 450 in the form of a matrix multiplication.

Prior to executing composite computation 450, the upper path of data flow diagram 400 can be executed to simplify the composite computation by identifying less salient outputs and suppressing the computations that would generate those outputs. As illustrated, operation 403 may be used to generate an execution data summary 404, and operation 405 may be used to generate a network data summary 406. Operation 403 may be an average pool 4 operation which averages every four data elements as illustrated. The resulting summary has a fourth of the data entries as the original data structure. Operation 405 may be the same as operation 403 (in this case an average pool 4 operation). As a result, network data summary 406 and execution data summary 404 can be utilized in a matrix multiply operation 407 to produce prediction 408. Operation 409 is representative of an additional step, not shown in flow chart 100, of evaluating the prediction to determine a set of salient outputs of the composite computation. This can be done in various ways. As the predictor can be an estimate of the output of the composite computation, evaluating the prediction can help to identify which portions of the output are most salient. In the illustrated case, operation 409 is a Top-K operation with K set equal to 2 such that the values of prediction 408 with the largest magnitudes are selected to generate prediction derivative 410. Prediction derivative 410 can then be used to simplify the original composite computation.

While executing composite computation 450, specific component computations are suppressed based on the prediction derivative 410 using control path 411. In the illustrated case, the component computations that have been suppressed are the sum product computations that would have filled the blank data entry squares in the white portions of simplified output 451. The associated component computations were suppressed as they were associated with the quadrants of the output that prediction derivative 410 identified as being less salient. The prediction derivative 410 effectively forms a mask which is used to condition composite computation 450 such that only the salient data entries are computed. Accordingly, the set of salient outputs (in the top left and bottom right quadrants of simplified output 451) are generated by a set of salient component computations of the composite computation 450 and a set of component computations are suppressed (the computations that lead to the top right and bottom left quadrants of simplified output 451). The set of component computations which are suppressed and the set of salient component computations are mutually exclusive.

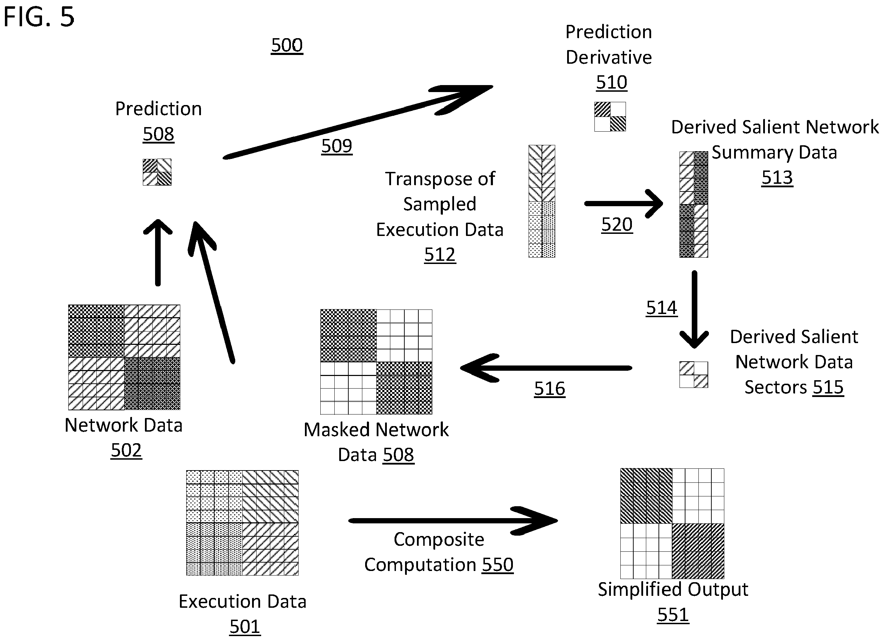

Figure 5 illustrates a conceptual data flow diagram 500 for the reduction of computations in the execution of an ANN using a predictor to determine a set of salient network data in the operand data of a composite computation 550 in accordance with specific embodiments of the invention disclosed herein. The conceptual data flow diagram 500 illustrates the data structures involved in the execution of a method that is in accordance with flow chart 100. Flow diagram 500 includes a block of execution data 501 and a block of network data 502. The block of execution data 501 and block of network data 502 are the operands for a composite computation 550 in the form of a matrix multiplication.

Prior to executing composite computation 550, the upper path of data flow diagram 500 can be executed to simplify the composite computation by identifying less salient network data and suppressing the computations that utilize the network data. Prediction 508 can be generated using a similar process to that utilized to generate prediction 408 in Fig. 4. As illustrated, the prediction 508 can then be evaluated to generate prediction derivative 510. Operation 509 can be a Top-K operation such as that used to generate prediction derivative 410 in Fig. 4. Operation 509 is representative of an additional step, not shown in flow chart 100, of evaluating the prediction to determine a set of salient outputs of the composite computation. Prediction derivative 510 will provide an indication as to which outputs of the composite computation 550 are most salient.

In specific embodiments of the invention represented by Fig. 5, the values in prediction derivative 510 can be used to determine a set of salient neural network data from the set of neural network data represented by block of network data 502. In particular, the values in prediction derivative 510 can then be utilized in a matrix multiply operation 520 with a transpose of sampled execution data 512. The sampled execution data which is transposed to generate transpose of sampled execution data 512 will already have been sampled from execution data 501 and used to generate prediction 508 such that it is already available for this calculation. The resulting product of that matrix multiplication is derived salient network summary data 513 which provides an indication as to the most important portion of network data 502 for composite computation 550. Accordingly, the derived salient network summary data 513 can be sampled, such as in an average pool 4 operation 514 to produce derived salient network data sectors 515. The derived salient network data sectors 515 can then be used to simplify the original composite computation 550.

While executing composite computation 550, specific component computations are suppressed based on the prediction derivative 510 using control path 516. In the illustrated case, the component computations that have been suppressed are the sum product operations that would have filled the blank data entry squares in the white portions of simplified output 551. The associated component computations were suppressed as they were associated with the quadrants of the masked network data 508 identified as being less salient. The suppression of the operations can be conducted by using the derived salient network data sectors 515 to generate a mask for network data 502 and suppressing any computation in composite computation 550 involving a network data element that was masked out. In specific embodiments, the mask could be a zero-mask setting any masked value to zero and the execution engine responsible for executing composite computation 550 could suppress any multiplication with a zero-value operand. Accordingly, the set of salient outputs (in the top right and bottom left quadrants of simplified output 551) are generated by a set of salient component computations of the composite computation 550 and a set of component computations are suppressed (the computations that would have computed the values for the top right and bottom left quadrants of simplified output 551).

The data flow diagram of Fig. 5 could be modified slightly to produce a different approach in which the execution data 501 is masked as opposed to the network data. The approach would involve a transpose of sampled network data in place of the transpose of sampled execution data 512 which would ultimately produce a derived salient execution data sector data structure in place of derived salient network data sectors 515. The approach would differ in that, after evaluating the prediction to determine a set of salient outputs of the composite computation, the set of salient outputs would be used to determine a set of salient execution data from the block of execution data 501 instead of a set of salient network data from the block of network data 502. The evaluating could use a top-K operation to select the set of salient outputs. The process used to determine the set of salient execution data using the set of salient outputs would involve utilizing a transpose of sampled network data in a matrix multiply operation with a prediction derivative similar to step 520. The transpose could be generated from the same sampled network data which was used to generate prediction 508. The derived salient execution data sectors data structure could then be used to suppress computations utilizing execution data in the identified data sectors of block of execution data 501 or by otherwise masking the execution data from execution data 501 to simplify composite computation 550. The suppressing of computations could suppress component computations in the composite computation that do not use the set of salient execution data.

The approaches described with reference to Figs. 4 and 5 will each likely produce different simplified outputs 551. However, each approach can be utilized to produce an output which maintains an acceptable degree of fidelity to the expected output such that the overall complex computation to which they are a part will produce the same output, or at least an acceptably similar output. Furthermore, in specific embodiments, different ones of these approaches can be utilized interchangeably for different composite computations during the execution of a single complex computation based on the characteristics of the network data and the execution data. For example, if the execution data is sparser than the network data, an approach which masked the network data could be applied. In the alternative, if the network data is sparser than the execution data, an approach which masked the execution data could be applied. If the two data structures have about the same level of sparsity, an approach which suppressed computations based on the output values could be applied. Furthermore, if the two data structures were both over a certain level of sparsity, the system could determine that the overhead associated with any of the disclosed approaches may not be worth the expected simplification of the composite computation, and the composite computation could be executed without any masking or additional suppression of operations. This approach would be particularly beneficial when paired with an execution engine that automatically suppressed multiplication operations when either operand was determined to be a zero.

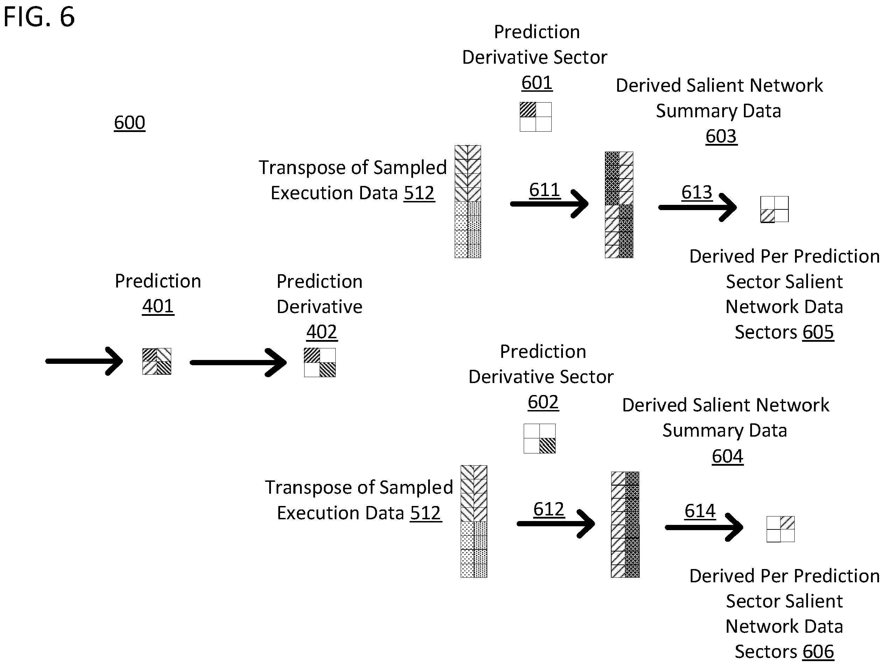

Figure 6 illustrates a conceptual data flow diagram 600 for the reduction of computations in the execution of an ANN using a predictor to more accurately determine a set of salient network data in the operand data of a composite computation in accordance with specific embodiments of the invention disclosed herein. Data flow diagram 600 starts with the generation of prediction 401 and prediction derivative 402. The process for generating these data structures can be the same as that described with reference to Fig. 4. The process continues with an approach that is similar to the generation of derived salient network summary data 513 in Fig. 5. However, in flow diagram 600, the prediction derivative is divided into sector specific values to create multiple data structures. In the illustrated approach, each non-zero sector of prediction derivative 402 is split off into its own prediction derivative sector data structure. As shown, since prediction derivative 402 has two non-zero sectors, it is split into prediction derivative sector 601 and prediction derivative sector 602. These data structures are then used to find salient portions of the network data or execution data, as described with reference to Fig. 5.

Flow diagram 600 further shows how the different prediction derivative sectors can be used to determine salient operand data for the composite computation. As shown, the different prediction derivative sectors 601 and 602 are used in different matrix multiplication operations 611 and 612 with a transpose of sampled execution data 512. The two different operations produce two data structures of derived salient network summary data 603 and derived salient network summary data 604. These two different data structures are essentially indicative of which network data was most salient for generating specific salient output values in the output of the composite computation.

Flow diagram 600 continues with average pool 4 operations 613 and 614 which generate derived per prediction sector salient network data sectors 605 and 606 which can be used to mask the input data to the composite computation during the execution of the composite computation. The input data can be masked by not conducting computations unless they are within the specific sectors identified by the per prediction sector salient network data sectors 605 and 606. In the illustrated case, the operand data in the transpose structures is execution data. However, by changing transpose of sampled execution data 512 to a transpose of sampled network data, the same process could be used to get data structures that are indicative of which execution data was most salient. This data could then be used to suppress computations in the composite computation which use specific execution data.

The processing cores disclosed herein can take on various forms. The processing cores can be processing cores in a multicore processor or standalone processors. The processing cores can be implemented as single chip systems, including wafer-scale single chip systems, multichip single package systems, or in a multichip multipackage system in which the chips are commonly attached to a common substrate such as a printed circuit board (PCB), interposer, or silicon mesh.

Although the specific examples provided in this section are directed to a network of computational nodes in the form of a NoC connecting a set of processing cores in a multicore processor, the approaches disclosed herein are broadly applicable to networks of any form of computational nodes. Furthermore, networks in accordance with this disclosure can be implemented on a single chip system, including wafer-scale single chip systems, in a multichip single package system, or in a multichip multipackage system in which the chips are commonly attached to a common substrate such as a printed circuit board (PCB), interposer, or silicon mesh. Networks in accordance with this disclosure can also include chips on multiple substrates linked together by a higher-level common substrate such as in the case of multiple PCBs each with a set of chips where the multiple PCBs are fixed to a common backplane. Networks in accordance with this disclosure can also be implemented in chiplet based systems. For example, in specific embodiments of the invention, one or more computational nodes could be housed or implemented by one or more chiplets, connected, for example, through an interposer.

The processing cores in accordance with this disclosure can include at least one non-transitory computer readable media. The media could include cache memories on the processing cores. The media can also include shared memories that are not associated with a unique computational node. The media could be a shared memory, could be a shared random-access memory, and could be, for example, a DRAM. The shared memory can be accessed by multiple channels. The non-transitory computer readable media can store data required for the execution of any of the methods disclosed herein, the instruction data disclosed herein, and/or the operand data disclosed herein. The computer readable media can also store instructions which, when executed by the system, cause the system to execute the methods disclosed herein. The concept of executing instructions is used herein to describe the operation of a device conducting any logic or data movement operation, even if the "instructions" are specified entirely in hardware (e.g., an AND gate executes an "and" instruction). The term is not meant to impute the ability to be programmable to a device.

Throughout this disclosure, ANNs provided a basis for explaining various embodiments of the invention disclosed herein. However, specific embodiments of the invention disclosed herein are more broadly applicable to the execution of any directed graph. Furthermore, specific embodiments of the invention disclosed herein are more broadly applicable to any complex computation including those used in association with graphics renderings, cryptographic algorithms, and big data computations generally.

Other aspects of the invention are defined in the following numbered statements:
Statement 1. A computer-implemented method, conducted during an execution of a neural network, comprising:
   generating a set of execution data;
   generating a summary of a set of neural network data of the neural network;
   generating a summary of a set of execution data of the execution of the neural network;
   generating a prediction using the summary of the set of neural network data and the summary of the set of execution data;
   executing a composite computation, wherein the composite computation is required for the execution of the neural network; and
   suppressing a set of component computations of the composite computation, wherein the set of component computations is at least partly determined by the prediction.
Statement 2. The computer-implemented method of Statement 1, wherein:
   execution of the neural network requires execution of a layer of the neural network;
   the composite computation is required for the execution of the layer of the neural network;
   the composite computation is a matrix multiply operation;
   the set of component computations are multiplication operations;
   the set of neural network data is a set of weights of the layer of the neural network; and
   the set of execution data is a set of output data from a prior layer of the neural network.
Statement 3. The computer-implemented method of Statement 1 or 2, further comprising, iteratively:
   generating, after executing the composite computation, at least one of: (i) additional summaries of additional sets of neural network data of the neural network; and (ii) additional summaries of additional sets of execution data of the neural network;
   generating, after generating the additional summaries, additional predictions using the additional summaries;
   executing additional composite computations; and
   suppressing additional sets of component computations of the additional composite computations, wherein the additional sets of component computations are at least partly determined by the additional predictions.
Statement 4. The computer-implemented method of any of Statements 1 to 3,
   wherein:
   the summary of the set of neural network data is generated using a first sampling operation; and
   the summary of the set of execution data is generated using a second sampling operation.
Statement 5. The computer-implemented method of Statement 4, wherein:
   the first sampling operation and the second sampling operation are average pooling operations.
Statement 6. The computer-implemented method of any of Statements 1 to 5,
   wherein:
   the prediction is generated using a predictor computation with the summary of the set of neural network data and the summary of the set of execution data as operands; and
   the composite computation and the predictor computation are a same type of computation.
Statement 7. The computer-implemented method of Statement 6, further comprising:
   evaluating the prediction to determine a set of salient outputs of the composite computation;
   wherein the set of salient outputs are generated by a set of salient component computations of the composite computation; and
   wherein the set of component computations and the set of salient component computations are mutually exclusive.
Statement 8. The computer-implemented method of Statement 7, wherein:
   the evaluating uses a top-K operation to select the set of salient outputs.
Statement 9. The computer-implemented method of Statement 6, further comprising:
   evaluating the prediction to determine a set of salient outputs of the composite computation;
   determining a set of salient neural network data from the set of neural network data using the set of salient outputs; and
   wherein the suppressing suppresses component computations in the composite computation that do not use the set of salient neural network data.
Statement 10. The computer-implemented method of Statement 9, wherein:
   the evaluating uses a top-K operation to select the set of salient outputs;
   the determining of the set of salient neural network data uses a transpose of the summary of the set of execution data.
Statement 11. The computer-implemented method of Statement 6, further comprising:
   evaluating the prediction to determine a set of salient outputs of the composite computation;
   determining a set of salient execution data from the set of execution data using the set of salient outputs; and
   wherein the suppressing suppresses component computations in the composite computation that do not use the set of salient execution data.
Statement 12. The computer-implemented method of Statement 11, wherein:
   the evaluating uses a top-K operation to select the set of salient outputs;
   the determining of the set of salient execution data uses a transpose of the summary of the set of network data.
Statement 13. The computer-implemented method of any of Statements 1 to 12,
   further comprising, prior to the execution of the neural network:
   compiling a set of instructions for the execution of the neural network using a set of at least two processing cores;
   assigning instructions from the set of instructions for generating the prediction to a first processing core in the set of at least two processing cores; and
   assigning instructions from the set of instructions for executing the composite computation to the first processing core.
Statement 14. The computer-implemented method of any of Statements 1 to 13,
   wherein:
   the set of neural network data is a block of neural network data;
   the block of neural network data: (i) holds a set of network data elements of the neural network; (ii) is larger than a single network data element; and (iii) is smaller than a layer of the neural network; and
   the composite computation uses the block of neural network data as an operand.
Statement 15. The computer-implemented method of any of Statements 1 to 14,
   wherein:
   the execution of the neural network is conducted while training the neural network; and
   set of execution data is part of a training input.
Statement 16. The computer-implemented method of any of Statements 1 to 15,
   wherein:
   the execution of the neural network is conducted after training the neural network.
Statement 17. A system comprising:
   a set of processing cores;
   a network communicatively connecting the processing cores;
   a neural network stored on a set of memories across the set of processing cores;
   a set of processing pipelines on the set of processing cores; and
   a set of instructions stored on the set of memories across the set of processing cores, wherein the set of instructions, when executed by the set of processing pipelines, cause the system to execute the neural network and conduct a method during the execution of the neural network, the method comprising:
      generating a set of execution data;
      generating a summary of a set of neural network data of the neural network;
      generating a summary of a set of execution data of the execution of the neural network;
      generating a prediction using the summary of the set of neural network data and the summary of the set of execution data;
      executing a composite computation, wherein the composite computation is required for the execution of the neural network; and
      suppressing a set of component computations of the composite computation, wherein the set of component computations is at least partly determined by the prediction.
Statement 18. The system of Statement 17, further comprising:
   a compiler programmed to conduct a method prior to the execution of the neural network, the method comprising:
   compiling the set of instructions;
   assigning instructions from the set of instructions for generating the prediction to a first processing core in the set of processing cores; and
   assigning instructions from the set of instructions for executing the composite computation to the first processing core.
Statement 19. A computer-implemented method, conducted during an execution of a directed graph, comprising:
   generating a set of execution data;
   generating a summary of a set of directed graph data of the directed graph;
   generating a summary of a set of execution data of the execution of the directed graph;
   generating a prediction using the summary of the set of directed graph data and the summary of the set of execution data;
   executing a composite computation, wherein the composite computation is required for the execution of the directed graph; and
   selectively executing a set of component computations of the composite computation, wherein the set of component computations is selected based on the prediction.
Statement 20. The computer-implemented method of Statement 19, further comprising:
   the summary of the set of directed graph data is generated using a first average pooling operation;
   the summary of the set of execution data is generated using a second average pooling operation; and
   the prediction is generated using a same type of operation as the composite computation with the summary of the set of directed graph data and the set of execution data as operands.

While the specification has been described in detail with respect to specific embodiments of the invention, it will be appreciated that those skilled in the art, upon attaining an understanding of the foregoing, may readily conceive of alterations to, variations of, and equivalents to these embodiments. Any of the method disclosed herein can be executed by a processor in combination with a computer readable media storing instructions for the methods in combination with the other hardware elements described above. These and other modifications and variations to the present invention may be practiced by those skilled in the art, without departing from the scope of the present invention, which is more particularly set forth in the appended claims.

## Claims

1. A computer-implemented method, conducted during an execution of a neural network, comprising:
generating a set of execution data;
generating a summary of a set of neural network data of the neural network;
generating a summary of a set of execution data of the execution of the neural network;
generating a prediction using the summary of the set of neural network data and the summary of the set of execution data;
executing a composite computation, wherein the composite computation is required for the execution of the neural network; and
suppressing a set of component computations of the composite computation,
wherein the set of component computations is at least partly determined by the prediction.

2. The computer-implemented method of claim 1, wherein:
execution of the neural network requires execution of a layer of the neural network;
the composite computation is required for the execution of the layer of the neural network;
the composite computation is a matrix multiply operation;
the set of component computations are multiplication operations;
the set of neural network data is a set of weights of the layer of the neural network; and
the set of execution data is a set of output data from a prior layer of the neural network.

3. The computer-implemented method of claim 1 or 2, further comprising, iteratively:
generating, after executing the composite computation, at least one of: (i) additional summaries of additional sets of neural network data of the neural network; and (ii) additional summaries of additional sets of execution data of the neural network;
generating, after generating the additional summaries, additional predictions using the additional summaries;
executing additional composite computations; and
suppressing additional sets of component computations of the additional composite computations, wherein the additional sets of component computations are at least partly determined by the additional predictions.

4. The computer-implemented method of any of claims 1 to 3, wherein:
the summary of the set of neural network data is generated using a first sampling operation; and
the summary of the set of execution data is generated using a second sampling operation.

5. The computer-implemented method of claim 4, wherein:
the first sampling operation and the second sampling operation are average pooling operations.

6. The computer-implemented method of any of claims 1 to 5, wherein:
the prediction is generated using a predictor computation with the summary of the set of neural network data and the summary of the set of execution data as operands; and
the composite computation and the predictor computation are a same type of computation.

7. The computer-implemented method of claim 6, further comprising:
evaluating the prediction to determine a set of salient outputs of the composite computation;
wherein the set of salient outputs are generated by a set of salient component computations of the composite computation; and
wherein the set of component computations and the set of salient component computations are mutually exclusive.

8. The computer-implemented method of claim 7, wherein:
the evaluating uses a top-K operation to select the set of salient outputs.

9. The computer-implemented method of claim 6, further comprising:
evaluating the prediction to determine a set of salient outputs of the composite computation;
determining a set of salient neural network data from the set of neural network data using the set of salient outputs; and
wherein the suppressing suppresses component computations in the composite computation that do not use the set of salient neural network data.

10. The computer-implemented method of claim 9, wherein:
the evaluating uses a top-K operation to select the set of salient outputs;
the determining of the set of salient neural network data uses a transpose of the summary of the set of execution data.

11. The computer-implemented method of claim 6, further comprising:
evaluating the prediction to determine a set of salient outputs of the composite computation;
determining a set of salient execution data from the set of execution data using the set of salient outputs; and
wherein the suppressing suppresses component computations in the composite computation that do not use the set of salient execution data.

12. The computer-implemented method of claim 11, wherein:
the evaluating uses a top-K operation to select the set of salient outputs;
the determining of the set of salient execution data uses a transpose of the summary of the set of network data.

13. The computer-implemented method of any of claims 1 to 12, further comprising, prior to the execution of the neural network:
compiling a set of instructions for the execution of the neural network using a set of at least two processing cores;
assigning instructions from the set of instructions for generating the prediction to a first processing core in the set of at least two processing cores; and
assigning instructions from the set of instructions for executing the composite computation to the first processing core.

14. The computer-implemented method of any of claims 1 to 13, wherein:
the set of neural network data is a block of neural network data;
the block of neural network data: (i) holds a set of network data elements of the neural network; (ii) is larger than a single network data element; and (iii) is smaller than a layer of the neural network; and
the composite computation uses the block of neural network data as an operand.

15. A system comprising:
a set of processing cores;
a network communicatively connecting the processing cores;
a neural network stored on a set of memories across the set of processing cores;
a set of processing pipelines on the set of processing cores; and
a set of instructions stored on the set of memories across the set of processing cores, wherein the set of instructions, when executed by the set of processing pipelines, cause the system to execute the neural network and conduct a method during the execution of the neural network, the method comprising:
generating a set of execution data;
generating a summary of a set of neural network data of the neural network;
generating a summary of a set of execution data of the execution of the neural network;
generating a prediction using the summary of the set of neural network data and the summary of the set of execution data;
executing a composite computation, wherein the composite computation is required for the execution of the neural network; and
suppressing a set of component computations of the composite computation, wherein the set of component computations is at least partly determined by the prediction.
